# EUROPEAN PATENT APPLICATION

(11) **EP 1 720 328 A1**
(43) Date of publication of application: **08.11.2006**
(21) Application number: 06007277.4
(22) Date of filing: 06.04.2006
(51) Int. Cl.: H04M 1/725

(54) **Apparatus and method for displaying information in Bluetooth communication mode of wireless terminal**

(30) Priority: 06.04.2005 KR 20050028433; 27.03.2006 KR 20060027557
(71) Applicant: Samsung Electronics Co., Ltd., Suwon-si, Gyeonggi-Do (KR)
(72) Inventor: Jang, Yun-Hoon, c/o Samsung Elec. co., Ltd., Suwon-si, Gyeonggi-do (KR); Chang, Jae-Won, c/o Samsung Elec. Co., Ltd., Suwon-si, Gyeonggi-do (KR); Choi, Seung-Chul, c/o Samsung Elec. Co., Ltd., Suwon-si, Gyeonggi-do (KR)
(74) Representative: Lang, Johannes

(57) **Abstract**

An apparatus and method are provided for displaying information in a Bluetooth communication mode of a wireless terminal. When devices for performing Bluetooth communication in the wireless terminal are searched, a controller of the wireless terminal classifies the searched devices according to device type, displays the classified devices, provides notification of an inactivated service state for the Bluetooth communication, and configures first submenus. If a corresponding device is selected from the searched devices and is Bluetooth-connected, the controller provides notification of an activated service state for the Bluetooth communication and configures second submenus. If a corresponding service is performed between the wireless terminal and the corresponding device through the Bluetooth communication, the controller provides notification of a current service state.

## Description

### BACKGROUND OF THE INVENTION

### Field of the Invention:

The present invention relates generally to an apparatus and method for displaying information in a Bluetooth communication mode of a wireless terminal. In particular, the present invention relates to an apparatus and method for notifying a user of a device type and a current service state in a Bluetooth communication mode of a wireless terminal.

### Description of the Related Art:

Bluetooth is one of the wireless interface standards for providing wireless connection between portable devices such as mobile phones and portable PCs, network access points, and other peripheral devices, at low price with low power consumption. Bluetooth comprises communication technology that is capable of connecting devices even though they are spaced some distance apart, for example, 10m (typically with a maximum of 100m), even with obstacles therebetween. A data rate of Bluetooth is 433.9Kbps in a symmetric communication mode and 723.2Kbps in an asymmetric communication mode. For voice transmission, Bluetooth uses a 64Kbps synchronous transmission scheme, and can provide a maximum of three voice channels. Additional research is now being conducted on 10Mbps-class technology that is further capable of the transmission of moving images.

To perform Bluetooth communication, a wireless terminal with the Bluetooth module first searches for devices currently available for Bluetooth communication, selects a corresponding device among the searched devices, and performs Bluetooth communication with the selected device. The wireless terminal can exchange files with the Bluetooth-connected device, and display the status information.

However, the wireless terminal cannot be aware of the types of the devices searched to perform Bluetooth communication in the Bluetooth communication mode. In addition, while a corresponding service is being performed, a user of the wireless terminal cannot determine whether the corresponding service is terminated, and also cannot be aware of the current service state.

Accordingly, a need exists for a system and method for notifying a user of a device type and a current service state in a Bluetooth communication mode of a wireless terminal.

### SUMMARY OF THE INVENTION

It is, therefore, an object of embodiments of the present invention to substantially solve the above and other problems, and provide an apparatus and method for notifying a user of a device type and a current service state in a Bluetooth communication mode of a wireless terminal.

According to one aspect of embodiments of the present invention, an apparatus is provided for displaying information in a Bluetooth communication mode of a wireless terminal. The apparatus comprises a controller for classifying devices according to device type, displaying the classified devices, and providing notification of a service state for Bluetooth communication, in the Bluetooth communication mode, and a display for displaying the devices classified according to device type and service state for the Bluetooth communication in the Bluetooth communication mode.

According to another aspect of embodiments of the present invention, a method is provided for displaying information in a Bluetooth communication mode of a wireless terminal. The method comprises the steps of determining a service state in the Bluetooth communication mode and if the service state is determined, providing notification of the service state.

According to another aspect of embodiments of the present invention, a method is provided for displaying information in a Bluetooth communication mode of a wireless terminal. The method comprises the steps of, if a device is selected in the Bluetooth communication mode, searching for devices for performing Bluetooth communication and classifying the searched devices according to device type and displaying the classified devices.

According to yet another aspect of embodiments of the present invention, a method is provided for displaying information in a Bluetooth communication mode of a wireless terminal. The method comprises the steps of, if devices for performing Bluetooth communication in the wireless terminal are searched, classifying the searched devices according to device type, displaying the classified devices, providing notification of an inactivated service state for the Bluetooth communication, and configuring first submenus. The method further comprises the steps of, if a corresponding device is selected from the searched devices and is Bluetooth-connected, providing notification of an activated service state for the Bluetooth communication and configuring second submenus, and if a corresponding service is performed between the wireless terminal and the corresponding device through the Bluetooth communication, providing notification of a current service state.

### BRIEF DESCRIPTION OF THE DRAWINGS

The above and other objects, features and advantages of embodiments of the present invention will become more apparent from the following detailed description when taken in conjunction with the accompanying drawings, in which:
FIG. 1 is a block diagram illustrating a structure of an exemplary wireless terminal according to an embodiment of the present invention;
FIG. 2 is a flowchart illustrating an exemplary process of displaying information in a Bluetooth communication mode of a wireless terminal according to an embodiment of the present invention; and
FIGs. 3A to 3E are diagrams for illustrating the process shown in FIG. 2 according to an embodiment of the present invention.

Throughout the drawings, like reference numerals will be understood to refer to like parts, components and structures.

### DETAILED DESCRIPTION OF EXEMPLARY EMBODIMENTS

Exemplary embodiments of the present invention will now be described in detail with reference to the annexed drawings. In the drawings, the same or similar elements are denoted by the same reference numerals even though they are depicted in different drawings.

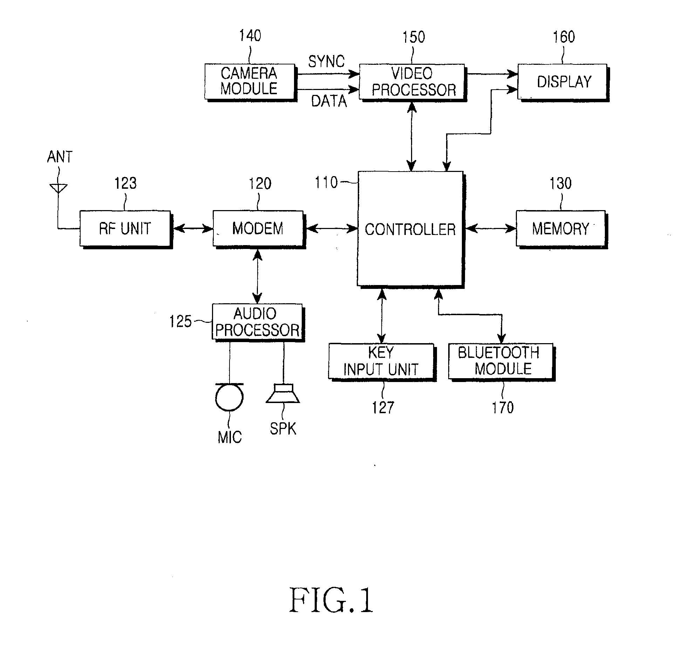

FIG. 1 is a block diagram illustrating a structure of an exemplary wireless terminal according to an embodiment of the present invention, wherein the wireless terminal comprises a camera module. The exemplary wireless terminal of FIG. 1 comprises a controller 110, a modem 120, a radio frequency (RF) unit 123, an audio processor 125, a key input unit 127, a memory 130, a camera module 140, a video processor 150, a display 160, and a Bluetooth module 170. The terminal can further comprise an antenna ANT, a microphone MIC, and a speaker SPK. Referring to FIG. 1, the radio frequency (RF) unit 123 performs a wireless communication function of the wireless terminal. The RF unit 123 comprises an RF transmitter for frequency-up-converting transmission signals and amplifying the frequency-up-converted signals, and an RF receiver for low-noise-amplifying received signals and frequency-down-converting the low-noise-amplified signals. The modem 120 comprises a transmitter for encoding and modulating the transmission signals ANT, and a receiver for demodulating and decoding the received signals. The audio processor 125 can be comprised of a codec, and the codec can comprise a data codec for processing packet data, and an audio codec for processing audio signals such as voice. The audio processor 125 converts the digital audio signals received from the modem 120 into analog signals through the audio codec to reproduce the audio signals. Further, the audio processor 125 converts the analog audio transmission signals generated from the microphone MIC into digital audio signals through the audio codec and delivers the digital audio signals to the modem 120. The codec can be either separately provided or included in the controller 110.

The memory 130 can be comprised of a program memory and a data memory. The program memory can store therein programs for controlling the general operation of the wireless terminal and programs for classifying the devices searched to perform Bluetooth communication in a Bluetooth communication mode according to device type, displaying the classified devices, and providing state information of the service performed in the Bluetooth communication mode according to embodiments of the present invention. The data memory temporarily stores the data generated in the course of performing the above programs.

The controller 110 controls the overall operations of the wireless terminal. The controller 110 may comprise therein the modem 120 and the codec.

The controller 110 classifies the devices searched to perform Bluetooth communication in the Bluetooth communication mode according to device type, displays the classified devices, and provides notification of the current service state for the Bluetooth communication according to embodiments of the present invention.

The controller 110 displays the searched devices classified according to device type, preferably using at least one of an icon and a distinguishable icon color. The controller 110 provides notification of the current service state for the Bluetooth communication preferably using at least one of an icon, a distinguishable icon color, and an action (such as blinking) of the icon. For illustration purposes, a blinking action will be described in the following exemplary embodiments.

The controller 110 configures first submenus according to types of the devices searched to perform Bluetooth communication and configures second submenus according to a type of the Bluetooth-connected device in the Bluetooth communication mode.

The Bluetooth module 170 performs wireless communication with the devices with a built-in Bluetooth module, and performs a corresponding service such as a service of exchanging files with the Bluetooth-connected device.

The camera module 140 comprises a camera sensor for photographing an image and converting the photographed optical signals into electrical signals, and a signal processor for converting the photographed analog image signals from the camera sensor into digital image data. Herein, the camera sensor is assumed for example, to be a Charge Coupled Device (CCD) sensor, and the signal processor can be implemented with a Digital Signal Processor (DSP), but embodiments of the present invention are not limited thereto. The camera sensor and the signal processor can be either integrated into a single body or implemented separately.

The video processor 150 generates screen data for displaying the image signals output from the camera module 140. The video processor 150 preferably processes the image signals output from the camera module 140 on a frame-by-frame basis, and outputs the frame image data according to characteristics and a size of the display 160. The video processor 150, comprising a video codec, compresses the frame image data displayed on the display 160 using a predetermined scheme, and restores the compressed frame image data into its original frame image data. To do so, the video codec can comprise a Joint Photographic Experts Group (JPEG) codec, a Motion Picture Experts Group 4 (MPEG4) codec, and a Wavelet codec, but is not limited thereto. The video processor 150 is assumed for example, to have an On-Screen Display (OSD) function, and can preferably output OSD data according to a screen size under the control of the controller 110.

The display 160 displays, on its screen, the image signals output from the video processor 150 and user data output from the controller 110. The display 160 can be implemented by using for example, a Liquid Crystal Display (LCD). In this case, the display 160 can comprise an LCD controller, a memory for storing image data, and an LCD device. The LCD may also serve as an input unit when it is implemented with a touch screen type LCD.

The display 160 can display the types of the devices searched to perform Bluetooth communication in the Bluetooth communication mode preferably using at least one of an icon and a distinguishable icon color according to embodiments of the present invention. The display 160 can also display the current service state in the Bluetooth communication mode preferably using at least one of an icon, a distinguishable icon color and blinking of the icon, according to embodiments of the present invention.

The key input unit 127 comprises alphanumeric keys used for inputting alphanumeric information, and function keys used for setting various functions, but is not limited thereto.

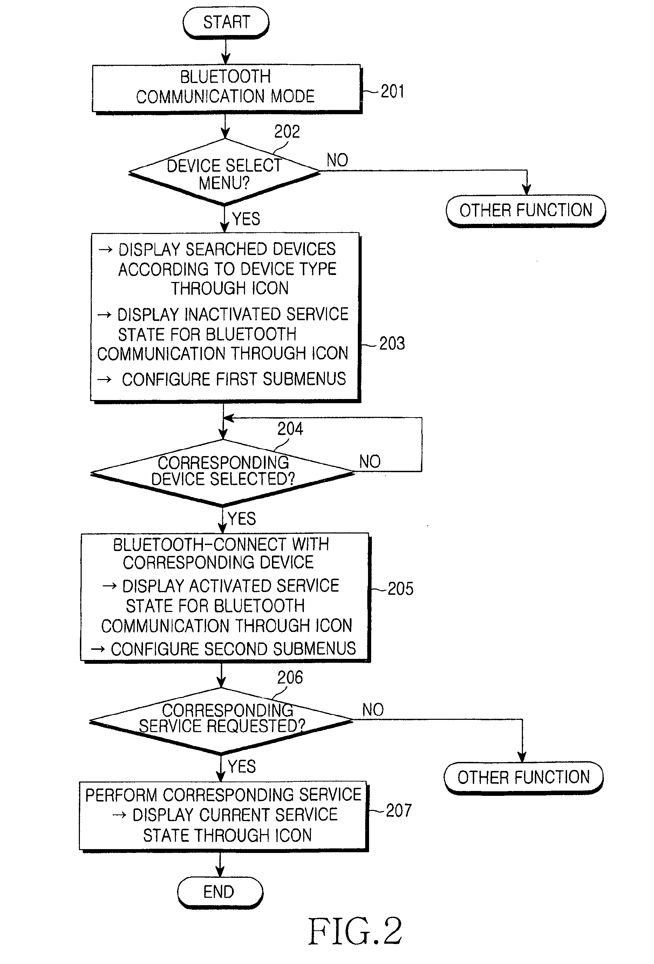

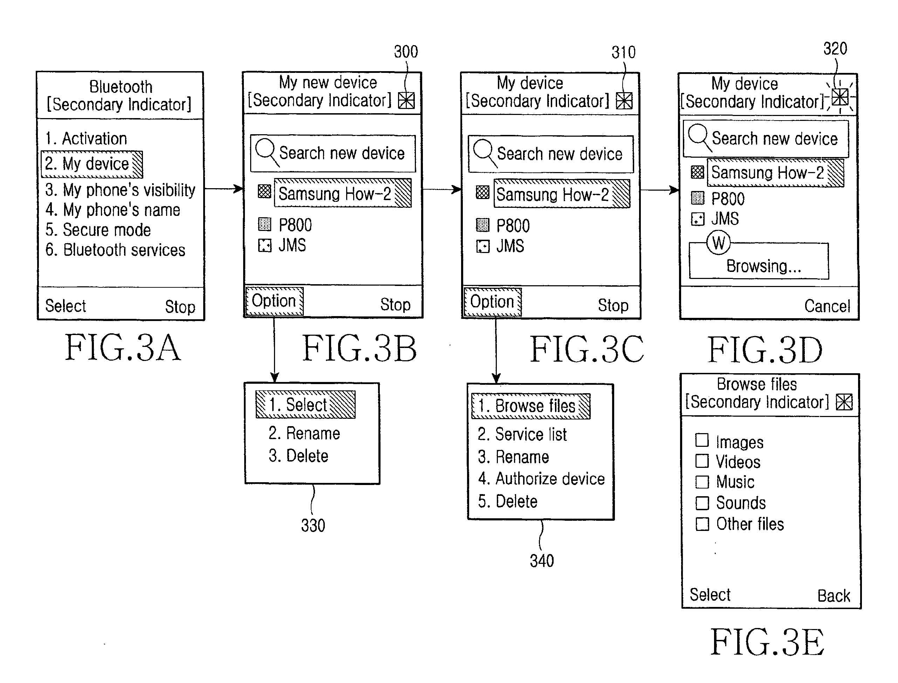

With reference to FIGs. 2 and 3A to 3E, a detailed description will now be made of an exemplary process of providing notification of a service state in a Bluetooth communication mode of a wireless terminal.

FIG. 2 is a flowchart illustrating an exemplary process of displaying information on the devices searched for Bluetooth communication and a current service state in a Bluetooth communication mode of a wireless terminal according to an embodiment of the present invention. FIGs. 3A to 3E are diagrams for illustrating the process shown in FIG. 2 according to an embodiment of the present invention.

Exemplary embodiments of the present invention preferably use an icon displayed in a distinguishable color in displaying types of the devices searched for Bluetooth communication and providing notification of the current service state in the Bluetooth communication mode. Alternatively, in other embodiments of the present invention, it is also possible to use an alarm and/or a message in addition to the icon in displaying the types of the devices searched for the Bluetooth communication and providing notification of the current service state.

With reference to FIGs. 1 to 3E, a detailed description will now be made of an exemplary embodiment of the present invention.

Referring to FIG. 2, if a user of a wireless terminal inputs a Bluetooth key in the wireless terminal, the controller 110 enters a Bluetooth communication mode in step 201.

The controller 110 determines in step 202 whether a device select menu is selected. If the device select menu is selected, the controller 110 searches for the devices currently available for Bluetooth communication and displays the searched devices on the display 160 in step 203.

In step 203, the controller 110 classifies the devices searched to perform the Bluetooth communication according to device type and displays the classified devices using an icon. The devices searched to perform the Bluetooth communication comprise devices with a built-in Bluetooth module that can perform wireless communication with the Bluetooth module 170 of the wireless terminal. The types of the devices can comprise mobile phones, handsets, handsfree sets, etc.

Therefore, in step 203, the controller 110 can display the types of the various devices with an icon in a distinguishable color. When a type of a specific device is displayed with its associated icon in a distinguishable color, a description of the device type associated with the color of the icon can be provided in a predetermined portion of the display 160.

Alternatively, the controller 110 can display the types of the various devices with their unique icons. For example, if the searched device is a mobile phone, the controller 110 can display a mobile phone icon, and if the searched device is a handset, the controller 110 can display a handset icon.

In addition, in step 203, the controller 110 can display an icon indicating an inactivated current service state for the Bluetooth communication, while displaying the types of the searched devices. As known to those skilled in the art, service states can comprise for example, non-discoverable states, page states, and inquiry states. Exemplary states described below comprise active/inactive states, and file request/file receipt. Further, the controller 110 can configure first submenus according to the types of the devices searched to perform the Bluetooth communication.

If a 'My device' menu is selected in the Bluetooth communication mode of FIG. 3A to search for the devices for performing Bluetooth communication, the types of the searched devices can be displayed with an icon in a distinguishable color in FIG. 3B. In FIG. 3B, the controller 110 displays an icon 300 indicating an inactivated current service state for the Bluetooth communication, and displays first submenus 330 configured according to the types of the searched devices. In FIG. 3B, the controller 110 displays the first submenus 330 including a '1. Select' menu for connecting a corresponding device for the Bluetooth communication, a '2. Rename' menu, and a '3. Delete' menu.

The controller 110 then determines in step 204 whether the user of the wireless terminal selects a corresponding device for performing the Bluetooth communication. If the user selects a corresponding device, the controller 110 connects the selected corresponding device for the Bluetooth communication and performs a corresponding service in step 205.

If the wireless terminal is Bluetooth-connected to the corresponding device in step 205, the controller 110 displays on the display 160 an icon indicating an activated service state for the Bluetooth communication. In this case, the icon is different in color from the icon indicating the inactivated service state.

In addition, in step 205, the controller 110 configures second submenus according to the type of the Bluetooth-connected device, while displaying the icon indicating the activated service state for the Bluetooth communication.

If the '1. Select' menu is selected from the first submenus 330 after a 'Samsung How-2' device corresponding to the mobile phone is selected among the available devices displayed in FIG. 3B, the controller 110 can indicate that the wireless terminal is Bluetooth-connected to the 'Samsung How-2' device as shown in FIG. 3C.

At this time, an icon 310 shown in FIG. 3C is displayed in blue for example, to indicate the activated service state for the Bluetooth communication, and the controller 110 displays second submenus 340 configured according to the type of the Bluetooth-connected device.

In FIG. 3C, the controller 110 displays the second submenus 340 including a '1. Browse files' menu for sending a file request to the corresponding device, a '2. Service list' menu for requesting a service list of the corresponding device, a '3. Rename' menu, a '4. Authorize device' menu, and a '5. Delete' menu.

If a type of the device with no file exchange function such as the handset or the handsfree set is selected among the types of the devices shown in FIG. 3B, the controller 110 can display the second submenus including a '1. Disconnect' menu.

The controller 110 then determines in step 206 whether the user of the wireless terminal sends a service request to the corresponding device after the wireless terminal is Bluetooth-connected to the corresponding device in step 205. If the user sends a service request to the corresponding device, the controller 110 performs a corresponding service with the corresponding device in step 207. Further, in step 207, the controller 110 can display the current service state using a distinguishable color and action, for example blinking, of the icon.

If the '1. Browse files' menu is selected among the second submenus 340 in FIG. 3C where the wireless terminal is Bluetooth-connected to the 'Samsung How-2' device, the controller 110 sends a file request to the 'Samsung How-2' device. Upon receiving files from the 'Samsung How-2' device in response to the file request, the controller 110 can indicate the receipt of files by blinking an icon 320 displayed in red on the display 160.

Even when the wireless terminal transmits files in response to a request from the 'Samsung How-2' device, the controller 110 can indicate the transmission of files using a distinguishable color and blinking of the icon.

FIG. 3E shows the lowest folder of the 'Samsung How-2' device, displayed on the display 160 of the wireless terminal, when the receipt of files from the 'Samsung How-2' device is completed through FIG. 3D.

As can be understood from the foregoing descriptions, embodiments of the present invention provide an apparatus and method for providing notification of a device type and a current service state in the Bluetooth communication mode of the wireless terminal. In this manner, the wireless terminal can notify its user of a type of the device searched for the Bluetooth communication, and the current service state for the Bluetooth communication.

While the present invention has been shown and described with reference to certain exemplary embodiments thereof, it will be understood by those skilled in the art that various changes in form and details may be made therein without departing from the spirit and scope of the invention as defined by the appended claims.

## Claims

1. An apparatus for displaying information in a Bluetooth communication mode of a wireless terminal, the apparatus comprising:
a controller for classifying devices according to device type, displaying the classified devices, and providing notification of a service state for Bluetooth communication, in the Bluetooth communication mode; and
a display for displaying the devices classified according to device type and the service state for the Bluetooth communication in the Bluetooth communication mode.

2. The apparatus of claim 1, wherein the controller is configured to display the classified devices searched to perform the Bluetooth communication using at least one of an icon and a distinguishable color of the icon.

3. The apparatus of claim 1, wherein the controller is configured to display the service state for the Bluetooth communication using at least one of an icon, a distinguishable color of the icon, and blinking of the icon to provide notification of the service state.

4. The apparatus of claim 1, wherein the controller configures first submenus according to types of devices searched to perform the Bluetooth communication, and configures second submenus according to a type of a Bluetooth-connected device.

5. A method for displaying information in a Bluetooth communication mode of a wireless terminal, the method comprising the steps of:
determining a service state in the Bluetooth communication mode; and
if the service state is determined, providing notification of the service state.

6. The method of claim 5, further comprising the step of, if the service state is determined, configuring corresponding submenus.

7. The method of claim 5, wherein the service state is displayed using at least one of an icon, a distinguishable color of the icon, and blinking of the icon.

8. A method for displaying information in a Bluetooth communication mode of a wireless terminal, the method comprising the steps of:
if a device is selected in the Bluetooth communication mode, searching for devices for performing Bluetooth communication; and
classifying the searched devices according to device type and displaying the classified devices.

9. The method of claim 8, wherein the classified devices are displayed using at least one of an icon and a distinguishable color of the icon.

10. The method of claim 8, further comprising the step of configuring corresponding submenus while displaying the searched devices classified according to device type.

11. A method for displaying information in a Bluetooth communication mode of a wireless terminal, the method comprising the steps of:
if devices for performing Bluetooth communication in the wireless terminal are searched, classifying the searched devices according to device type, displaying the classified devices, providing notification of an inactivated service state for the Bluetooth communication, and configuring first submenus;
if a corresponding device is selected from the searched devices and is Bluetooth-connected, providing notification of an activated service state for the Bluetooth communication and configuring second submenus; and
if a corresponding service is performed between the wireless terminal and the corresponding device through the Bluetooth communication, providing notification of a current service state.

12. The method of claim 11, wherein the classified devices are displayed using at least one of an icon and a distinguishable color of the icon.

13. The method of claim 11, wherein notification of the inactivated service state for the Bluetooth communication is provided using at least one of an icon and a distinguishable color of the icon.

14. The method of claim 11, wherein the corresponding device is selected from the searched devices through the first submenus when the Bluetooth communication is in the inactivated service state.

15. The method of claim 11, wherein the first submenus are configured according to types of the devices searched to perform the Bluetooth communication.

16. The method of claim 15, wherein the first submenus comprise a select menu for Bluetooth-connecting a corresponding device, a rename menu, and a delete menu.

17. The method of claim 11, wherein the activated service state for the Bluetooth communication is displayed using at least one of an icon, a distinguishable color of the icon, and blinking of the icon.

18. The method of claim 11, wherein the corresponding service is performed between the wireless terminal and the corresponding device through the Bluetooth communication using the second submenus configured when the Bluetooth communication is in the activated service state.

19. The method of claim 11, wherein the second submenus are configured according to types of the Bluetooth-connected devices.

20. The method of claim 19, wherein the second submenus comprise a browse files menu for sending a file request to the corresponding device, a service list menu for requesting a service list of the corresponding device, a rename menu, an authorize device menu, and a delete menu.

21. The method of claim 19, wherein the second submenus comprise a disconnect menu for disconnecting the Bluetooth-connected device.

22. The method of claim 11, wherein notification of the current service state is provided using at least one of an icon, a distinguishable color of the icon, and blinking of the icon.
